# EUROPÄISCHE PATENTSCHRIFT

(11) **EP 1 295 452 B1**
(45) Veröffentlichungstag und Bekanntmachung des Hinweises auf die Patenterteilung: **22.10.2003**
(21) Anmeldenummer: 00936586.7
(22) Anmeldetag: 26.06.2000
(51) Int. Cl.: H04L 29/06, G07F 7/10, H04L 29/08

(54) **END-ZU-END-SICHERUNG VON TRANSAKTIONEN ZWISCHEN EINEM MOBILENDGERÄT UND EINEM INTERNET-SERVER AUF DER APPLIKATIONSEBENE**
END-TO-END SECURITY OF TRANSACTIONS BETWEEN A MOBILE TERMINAL AND AN INTERNET SERVER AT THE APPLICATION LEVEL
CONFIDENTIALITE DE BOUT EN BOUT DE TRANSACTIONS REALISEES ENTRE UN TERMINAL MOBILE ET UN SERVEUR INTERNET AU NIVEAU APPLICATION

(43) Veröffentlichungstag der Anmeldung: 26.03.2003
(73) Patentinhaber: Swisscom Mobile AG, 3050 Bern (CH)
(72) Erfinder: ETIQUE, Pierre-Alain, CH-3032 Hinterkappelen (CH); HUBER, Adriano, CH-6600 Locarno (CH)
(74) Vertreter: BOVARD AG - Patentanwälte
(86) Internationale Anmeldenummer: CH0000347
(87) Internationale Veröffentlichungsnummer: WO02001829

(56) Entgegenhaltungen:
- EP-A- 0 991 242
- WO-A-99/03243

## Beschreibung

Die vorliegende Erfindung betrifft ein Verfahren und einen dafür geeigneten Server zur End-zu-End-Sicherung von Transaktionen zwischen einem Mobilendgerät und einem Internet-Server auf der Applikationsebene. Insbesondere betrifft die vorliegende Erfindung ein Verfahren und einen dafür geeigneten Proxy-Server zur End-zu-End-Sicherung von Transaktionen auf der Applikationsebene zwischen einem Mobilendgerät und einem Internet-Server, der mindestens eine Internet-Server-Applikation umfasst, die zur eindeutigen Identifizierung einer Applikationstransaktion Transaktionsidentifizierungsbelege an die Transaktionspartnerapplikation überträgt und Transaktionsidentifizierungsbelege entgegennimmt, die von der Transaktionspartnerapplikation zur eindeutigen Identifizierung der Applikationstransaktion an die Internet-Server-Applikation zurück übertragen werden.

Die Verwendung von Transaktionsidentifizierungsbelegen zur Identifizierung von Transaktionen und Sessions zwischen Internet-Servern (oder Web-Servern) und Endgeräten von Benutzern (beispielsweise Personal Computers), respektive der Applikationen auf diesen Endgeräten (beispielsweise Browsern), ist bekannt. Mittel zum Austauschen von Transaktionsidentifizierungsbelegen, die vor allem unter dem Namen "Cookies" bekannt sind, wurden von der Firma Netscape eingeführt, um Interaktionen auf der Applikationsebene, zwischen Web-Servern und Browsern, besser handhaben zu können, da das darunterliegende Hypertext Transport Protocol (HTTP) ein verbindungsloses Request/Response-Protokoll ist (und folglich über keine Zustandsverwaltung verfügt). Die Cookies, mittels welchen Transaktionsidentifizierungsbelege übertragen werden können, werden vom Web-Server an den Browser übermittelt, wenn der Benutzer mit dem Browser den Web-Server, beispielsweise zum ersten Mal, kontaktiert. Empfangene Cookies werden vom Browser typischerweise auf der Festspeicherplatte des Endgeräts gespeichert. Die Instruktion an den Browser zur Speicherung eines Cookies lautet beispielsweise: *Set Cookie: Name="Wert"; Expires="Datum"; Path="Pfad"; Domain="Domain-Name"; Secure.* Nach erfolgter Speicherung eines Cookies überträgt der Browser den Wert des Cookies im HTTP-Request-Datenvorsatz an den betreffenden Web-Server, wenn der Browser vom Benutzer instruiert wird eine URL-Adresse zu beziehen, deren Domain-Name und Pfad mit den für das Cookie gesetzten Werten übereinstimmen. Falls die Option "Secure" gesetzt ist, erfolgt dies nur, wenn die Übertragung über eine gesicherte Verbindung erfolgt, beispielsweise über eine erstellte Session des Secure Socket Layers (SSL). Mittels der Cookies können so Interaktionen zwischen dem Benutzer des Browsers und dem Web-Server über längere Zeit, beispielsweise Minuten oder Jahre, und über mehrere Request/Response-Zyklen durch Applikationen des Web-Servers gehandhabt werden, wobei Sessions von verschiedenen Benutzern und Transaktionen differenziert werden können.

Mittels der Mechanismen des im Internet verwendeten Secure Socket Layers kann im Prinzip eine "verschlüsselte Röhre" (encrypted pipe) zwischen dem Client-Endgerät, auf dem der Browser läuft, und dem betreffenden Web-Server erstellt werden, die die Vertraulichkeit von ausgetauschten Daten, das heisst den unbefugten Zugriff auf die ausgetauschten Daten, sicherstellt und die Überprüfung der Authentizität der beteiligten Transaktionspartner (Client und Server) ermöglicht, beispielsweise durch Login des Benutzers mittels Benutzername, Benutzerpasswort, einmaligem Benutzerpasswort (z.B. ab Streichliste oder Secure ID) oder anderen bekannten Mechanismen.

Insbesondere sicherheitskritische Applikationen, wie beispielsweise Home-Banking und e-Commerce, die im Internet implementiert werden, stellen hohe Sicherheitsanforderungen hinsichtlich der Vertraulichkeit der Daten, der Authentizität der beteiligten Transaktionspartner, der Integrität der Daten und oft auch hinsichtlich der Nichtabstreitbarkeit des Ursprungs der Daten, respektive der Transaktionen, anlässlich derer die Daten ausgetauscht werden. Die notwendige Sicherheit wird vorzugsweise durch eine End-zu-End-Sicherung der Transaktionen zwischen den Transaktionspartnern auf der Applikationsebene erreicht, das heisst durch Mechanismen der Applikationen und nicht durch Mechanismen von darunterliegenden Protokollschichten. Diesbezüglich weist eine auf SSL-basierende Lösung das Problem auf, dass ein unbefugter Angreifer, der zwischen der SSL-Schicht und der Applikationsebene in das System eindringen kann, falsche Requests in Applikationstransaktionen einfügen kann, was insbesondere für sicherheitskritische Applikationen problematische Auswirkungen hat. Überdies könnte ein Fehler in der Handhabung der Sessions auf der SSL-Schicht dazu führen, dass ein Request oder eine Response inkorrekterweise einer falschen Applikationstransaktion zugeordnet wird, was ebenfalls problematische Auswirkungen hat.

Um diese Probleme zu vermeiden kann der eingangs beschriebene Mechanismus der Cookies so verwendet werden, dass Requests jeweils in Kombination mit einem Cookie (und einem darin enthaltenen Transaktionsidentifizierungsbeleg) an den Server übermittelt werden, so dass die Transaktionen auf der Applikationsebene jeweils eindeutig identifiziert werden können. Um einen Angriff durch den oben erwähnten unbefugten Angreifer, der zwischen der SSL-Schicht und der Applikationsebene falsche Requests in Applikationstransaktionen einfügt, zu verhindern, werden die Transaktionsidentifizierungsbelege (in den Cookies) jeweils mit kryptographischen Elementen versehen. Falls solche kryptographischen Transaktionsidentifizierungsbelege hohen Sicherheitsanforderungen genügen sollen, werden sie typischerweise ziemlich lang, beispielsweise braucht es für eine digitale Signatur mit 1024 bits ein Cookie (mit dem darin enthaltenen Transaktionsidentifizierungsbeleg) mit einer Länge von 160 bytes.

Obwohl mit dem aus dem Stand der Technik hergeleiteten Verfahren zur End-zu-End-Sicherung von Transaktionen zwischen Endgeräten und Internet-Servern auf der Applikationsebene basierend auf kryptographischen, in Cookies übertragenen Transaktionsidentifizierungsbelegen die oben angeführten Probleme von falschen Requests behoben werden können, kann dieses Verfahren nicht für Mobilendgeräte angewendet werden, beispielsweise Mobilfunktelefone oder mobile kommunikationsfähige Computer, wie Laptop-Computer, Palmtop-Computer oder PDAs (Personal Digital Assistants), einerseits, weil die verfügbaren Mobilendgeräte nicht mit Kommunikationsprotokollen ausgestattet sind, die Cookies unterstützen (beispielsweise unterstützt das in Mobilendgeräten für den Zugriff auf das Internet verwendete Wireless Application Protocol, WAP, keine Cookies), und andererseits, weil die benötigte Länge der kryptographischen Transaktionsidentifizierungsbelege für die mobile Kommunikation nicht sehr effizient sind.

Ein Beispiel von einem Verfahren zum Zwischenspeichern von Legalisierungsdaten in Proxy-Servers für drahtlose Teilnehmeragenten ist aus der EP-A-0 991 242 bekannt.

Es ist eine Aufgabe dieser Erfindung, ein neues und besseres Verfahren sowie dafür geeignete Mittel vorzuschlagen, welche die End-zu-End-Sicherung von Transaktionen zwischen einem Mobilendgerät und einem Internet-Server auf der Applikationsebene ermöglichen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass kryptographische Transaktionsidentifizierungsbelege (beispielsweise in Cookies enthalten), die an Transaktionspartnerapplikationen im Mobilendgerät gerichtet sind, in einem Transaktionsidentifizierungsbeleg-Proxy-Server, dem Mobilendgerät zugeordnet gespeichert werden, dass durch den Proxy-Server jeweils eine Belegsidentifizierung eines betreffenden gespeicherten Transaktionsidentifizierungsbelegs sowie ein Beleg-Proxy, das durch den Proxy-Server aus dem betreffenden gespeicherten Transaktionsidentifizierungsbeleg berechnet wird, an das Mobilendgerät übertragen werden, dass jeweils eine Belegsidentifizierung und ein Beleg-Proxy durch den Proxy-Server aus den Meldungen entnommen werden, die vom Mobilendgerät an die Internet-Server-Applikation gerichtet sind, und die Übereinstimmung des entnommenen Beleg-Proxys mit dem Beleg-Proxy überprüft wird, das aus dem durch die entnommene Belegsidentifizierung bestimmten gespeicherten Transaktionsidentifizierungsbeleg berechenbar ist, und dass bei einer Übereinstimmung der durch die entnommene Belegsidentifizierung bestimmte gespeicherte Transaktionsidentifizierungsbeleg an die Internet-Server-Applikation übertragen wird. Der Vorteil des Proxy-Servers, der jeweils einen an ein Mobilendgerät gerichteten Transaktionsidentifizierungsbeleg durch ein Tupel, bestehend aus einer Belegsidentifizierung des gespeicherten betreffenden Transaktionsidentifizierungsbelegs und einem Beleg-Proxy, das aus dem betreffenden Transaktionsidentifizierungsbeleg berechnet wird, besteht insbesondere darin, dass der durch den Internet-Server verwendete Mechanismus der Transaktionsidentifizierungsbelege (Cookies) auf Mobilendgeräte abgebildet werden kann, die diesen Mechanismus nicht unterstützen, wobei die End-zu-End-Sicherung zwischen dem Mobilendgerät und dem Internet-Server auf der Applikationsebene durch das kryptographische Beleg-Proxy erhalten bleibt, das aus dem betreffenden Transaktionsidentifizierungsbeleg berechnet wird und das eine viel kürzere Länge aufweisen kann als der Transaktionsidentifizierungsbeleg, aus dem es berechnet wird. Die Belegsidentifizierung alleine könnte durch einen Angreifer vorgetäuscht werden; das jeweils aus dem betreffenden Transaktionsidentifizierungsbeleg berechnete Beleg-Proxy ist allerdings für einen Angreifer nicht vortäuschbar, da die Transaktionsidentifizierungsbelege mit jeder Transaktion wechseln können und die Übereinstimmung des Tupels durch den Proxy-Server überprüft wird.

Vorzugsweise werden die an das Mobilendgerät zu übertragenden Belegsidentifizierung und Beleg-Proxy in einem Datenelement übertragen, das jeweils durch die Transaktionspartnerapplikation im Mobilendgerät automatisch in Meldungen eingefügt wird, die an die Internet-Server-Applikation gerichtet sind. Dieses Vorgehen hat insbesondere den Vorteil, dass auch das Mobilendgerät, respektive Softwareprogramme des Mobilendgeräts, nicht angepasst werden müssen.

Vorzugsweise wird das Beleg-Proxy mittels einer Oneway-Hash-Funktion aus dem gespeicherten Transaktionsidentifizierungsbeleg berechnet. Der Vorteil, eine Oneway-Hash-Funktion zur Berechnung des Beleg-Proxys aus dem Transaktionsidentifizierungsbeleg zu verwenden, besteht insbesondere darin, dass einerseits die Berechnung des Beleg-Proxys aus dem Transaktionsidentifizierungsbeleg einfach ausgeführt werden kann, aber, in der umgekehrten Richtung, die Berechnung des Transaktionsidentifizierungsbelegs aus dem Beleg-Proxy äusserst schwierig, wenn nicht unmöglich, ist, und dass andererseits ein Beleg-Proxy mit einer vordefinierten Länge aus dem Transaktionsidentifizierungsbeleg berechnet werden kann, auch wenn die Länge des Transaktionsidentifizierungsbelegs variiert, wobei die vordefinierte Länge des Beleg-Proxys insbesondere kürzer ist als die Länge des Transaktionsidentifizierungsbelegs aus dem es berechnet wird.

In einer Ausführungsvariante erfolgt die Zuordnung zum Mobilendgerät bei der Speicherung der kryptographischen Transaktionsidentifizierungsbelege im Proxy-Server, über die IP-Adresse des Mobilendgeräts. Dies ist insbesondere dann vorteilhaft, wenn durch die verwendeten Kommunikationsprotokolle kein anderes Datenelement zwischen dem Mobilendgerät und dem Internet-Server ausgetauscht wird, das zur Identifizierung des Mobilendgeräts dienen könnte.

In einer Ausführungsvariante wird im Proxy-Server eine Protokolldatei geführt, in der Angaben über die Ersetzung von Transaktionsidentifizierungsbelegen durch Beleg-Proxy, respektive von Beleg-Proxys durch Transaktionsidentifizierungsbelege, Angaben über den Zeitpunkt dieser Ersetzung sowie Angaben über die Transaktionspartner gespeichert werden, die an der Transaktion beteiligt sind, anlässlich welcher die Ersetzung vorgenommen wird. Der Vorteil einer solchen Protokolldatei liegt insbesondere darin, dass sie zu einem späteren Zeitpunkt dazu verwendet werden kann, den erfolgten Transaktionsablauf auf der Applikationsebene zwischen dem Mobilendgerät und dem Internet-Server nachzuweisen.

In alternativen Ausführungsvarianten ist der Proxy-Server in die Kommunikationsstrecke zwischen der Intemet-Server-Applikation und der Transportsicherheitsschicht des Internet-Servers einfügbar und wird mit dem Internet-Server auf einem gemeinsamen Computer ausgeführt, oder der Proxy-Server ist mit einem Gateway, der ein Mobilfunknetz und das Internet miteinander verbindet, auf einem gemeinsamen Computer ausgeführt und in die Kommunikationsstrecke zwischen der Transportsicherheitsschicht des Mobilfunknetzes und der Transportsicherheitsschicht des Internets einfügbar.

Nachfolgend wird eine Ausführung der vorliegenden Erfindung anhand eines Beispieles beschrieben. Das Beispiel der Ausführung wird durch folgende beigelegten Figuren illustriert:
Figur 1 zeigt ein Blockdiagramm, welches schematisch ein Mobilendgerät und einen Internet-Server illustriert, die über einen Gateway kommunizieren, der ein Mobilfunknetz und das Internet miteinander verbindet.
Figur 2 zeigt ein Blockdiagramm, welches schematisch ein Mobilendgerät und einen Internet-Server illustriert, die über einen Gateway kommunizieren, der eine Mobilnetz-Sicherheitsröhre und eine Internet-Sicherheitsröhre miteinander verbindet.
Figur 3 zeigt ein Schichtendiagramm, welches schematisch die Kommunikationsprotokollstapel eines Mobilendgeräts, eines Internet-Servers sowie des Gateways, über den das Mobilendgerät und der Internet-Server miteinander kommunizieren, illustriert.
Figur 4 zeigt ein kombiniertes Zeit- und Flussdiagramm, in welchem schematisch der Austausch von Transaktionsidentifizierungsbelegen, respektive aus diesen Transaktionsidentifizierungsbelegen berechnete Beleg-Proxy, zur End-zu-End-Sicherung von Transaktion auf der Applikationsebene zwischen einem Mobilendgerät und einem Internet-Server, als Transaktionspartner, über einen Proxy-Server illustriert.
Figur 5 zeigt ein Blockdiagramm, welches schematisch einen Proxy-Server illustriert.

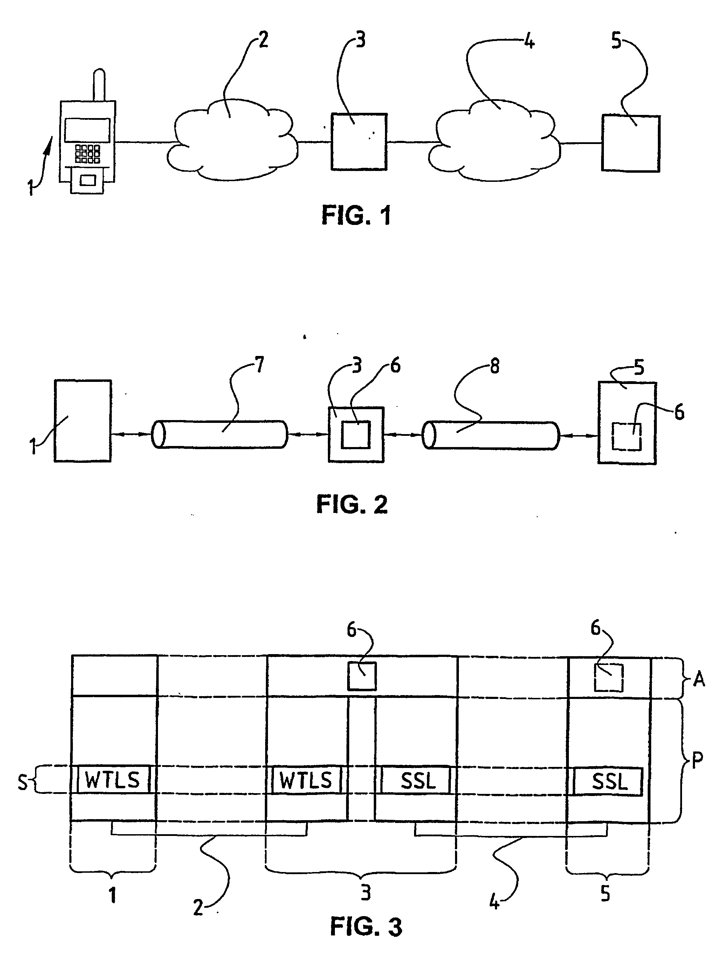

In der Figur 1 bezieht sich die Bezugsziffer 1 auf ein Mobilendgerät, beispielsweise ein WAP-taugliches Mobilendgerät, das über ein Mobilfunknetz 2, beispielsweise ein GSM- oder UMTS- oder ein anderes, z.B. satellitenbasiertes Mobilfunknetz kommunizieren kann. Wie in der Figur 1 schematisch dargestellt ist, ist das Mobilfunknetz 2 über einen Gateway 3, beispielsweise ein WAP-Gateway, mit dem Internet 4 verbunden, an welches ein Internet-Server 5 angeschlossen ist.

In der Figur 2 wird die in der Figur 1 illustrierte Anordnung hinsichtlich der Transportsicherheitsschicht zwischen dem Mobilendgerät 1 und dem Internet-Server 5 illustriert, wobei das Mobilfunknetz 2 sowie die Kommunikationsprotokolle des Mobilendgeräts 1 und des Gateways 3 für den Zugriff auf und die Kommunikationsabwicklung über das Mobilfunknetz 2 bis und mit der Transportsicherheitsschicht, beispielsweise gemäss dem WTLS-Protokoll (Wireless Transport Layer Security), als Mobilnetz-Sicherheitsröhre 7 abstrahiert dargestellt wird, und wobei das Internet 4 sowie die Kommunikationsprotokolle des Gateways 3 und des Internet-Servers 5 für den Zugriff auf und die Kommunikationsabwicklung über das Internet 4 bis und mit der Transportsicherheitsschicht, beispielsweise gemäss dem SSL-Protokoll (Secure Socket Layer), als Internet-Sicherheitsröhre 8 abstrahiert dargestellt wird. In der Figur 2 bezieht sich die Bezugsziffer 6 auf einen Transaktionsidentifizierungsbeleg-Proxy-Server, der in der nachfolgenden Beschreibung näher erläutert wird und abgekürzt als Proxy-Server 6 bezeichnet wird. Der Proxy-Server 6 wird vorzugsweise als programmiertes Softwaremodul auf einem Computer ausgeführt. Wie in der Figur 2 dargestellt wird kann der Proxy-Server 6 mit dem Gateway 3 auf einem gemeinsamen Computer implementiert werden (Block 6 mit ausgezogener Linie), wo er in die Kommunikationsstrecke zwischen dem Internet-Server 5, respektive einer Internet-Server-Applikation, und der Mobilnetz-Sicherheitsröhre 7 eingefügt ist, oder der Proxy-Server 6 kann mit dem Internet-Server 5 auf einem gemeinsamen Computer implementiert werden (Block 6 mit gestrichelter Linie), wo er in die Kommunikationsstrecke zwischen dem Internet-Server 5, respektive einer Internet-Server-Applikation, und der Internet-Sicherheitsröhre 8 eingefügt ist.

In der Figur 3 sind die Kommunikationsprotokollstapel P sowie die darüberliegende Applikationsebene A in einem schematischen Schichtenmodell für das Mobilendgerät 1, den Gateway 3 sowie den Internet-Server 5 dargestellt. Dabei wird in der Figur 3 einzig die Transportsicherheitsschicht S als Schicht hervorgehoben, wobei als Transportsicherheitsschicht für die Kommunikation zwischen dem Mobilendgerät 1 und dem Gateway 3 über das Mobilfunknetz 2 beispielsweise das WTLS-Protokoll, und für die Kommunikation zwischen dem Gateway 3 und dem Internet-Server 5 über das Internet 4 beispielsweise das SSL-Protokoll verwendet wird. Die Kommunikationsprotokollstapel P im Mobilendgerät 1 und im Gateway 3 zur Kommunikation über das Mobilfunknetz 2 sind beispielsweise gemäss WAP (Wireless Application Protocol) ausgeführt. Wie in der Figur 3 zudem dargestellt wird, kann der Proxy-Server 6 auf der Applikationsebene A ausgeführt werden, wie bereits oben angegeben zusammen mit dem Gateway 3 oder mit dem Internet-Server 5 auf einem Computer.

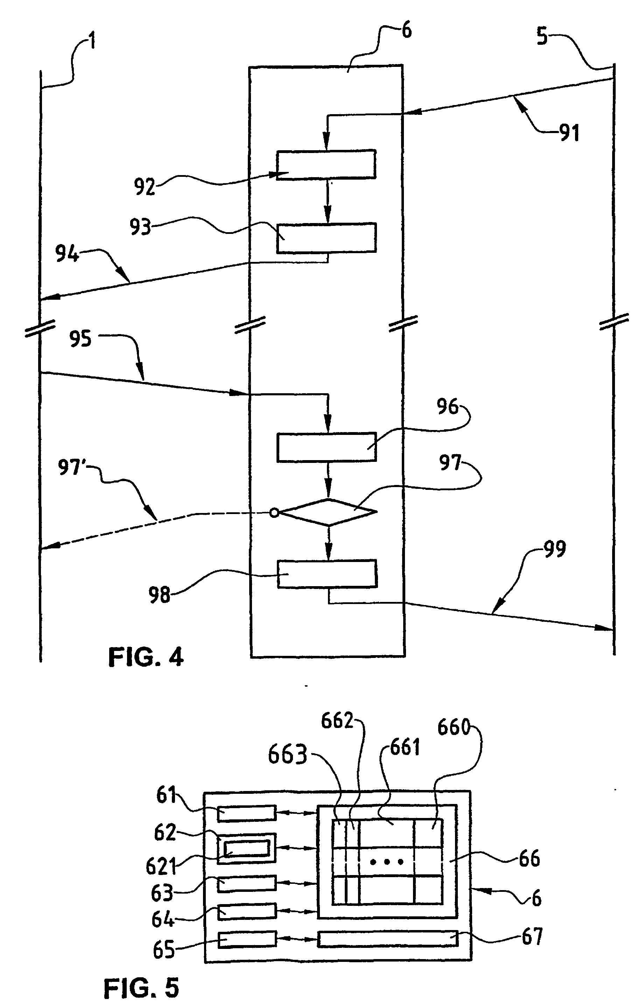

In der Figur 4 bezieht sich das Bezugszeichen 91 auf die Übertragung eines an das Mobilendgerät 1, respektive an eine Applikation des Mobilendgeräts 1, gerichteten kryptographischen Transaktionsidentifizierungsbelegs durch den Internet-Server 5, respektive durch eine Internet-Server-Applikation des Internet-Servers 5. Der Proxy-Server 6, der in die Kommunikationsstrecke zwischen dem Internet-Server 5 und dem Mobilendgerät 1 eingefügt ist, nimmt den kryptographischen Transaktionsidentifizierungsbeleg mittels des in der Figur 5 dargestellten Belegspeichermoduls 61 entgegen und speichert ihn im Schritt 92 im Belegabbildungsspeicher 66 ab. Der Transaktionsidentifizierungsbeleg umfasst beispielsweise eine digitale Signatur als kryptographisches Element. Die Abspeicherung des kryptographischen Transaktionsidentifizierungsbelegs erfolgt unter Zuordnung zum Mobilendgerät 1, wobei dem abgespeicherten kryptographischen Transaktionsidentifizierungsbeleg 661 eine Mobilendgerätidentifizierung 662 zugeordnet wird. Als Mobilendgerätidentifizierung 662 kann beispielsweise die IP-Adresse (Internet Protocol) des Mobilendgeräts 1 verwendet werden, an welches die betreffende Meldung mit dem kryptographischen Transaktionsidentifizierungsbeleg gerichtet ist.

Im Schritt 93 wird im Proxy-Server 6 mittels des Beleg-Proxy-Moduls 62 aus dem abgespeicherten Transaktionsidentifizierungsbeleg 661 ein eindeutiges (unique) Beleg-Proxy berechnet. Die Berechnung des Beleg-Proxys erfolgt durch eine kryptographische Funktion 621, beispielsweise durch eine One-Way-Hash-Funktion 621, beispielsweise eine Hash-Funktion gemäss MD5 oder SHA1. Das berechnete Beleg-Proxy wird, wie in der Figur durch den Pfeil 94 angedeutet, vom Beleg-Proxy-Modul 62 unter Zuhilfenahme der Kommunikationsfunktionen des Internet-Servers 1 oder des Gateways 3, je nachdem wo der Proxy-Server 6 implementiert ist, zusammen mit einer Belegsidentifizierung des abgespeicherten Transaktionsidentifizierungsbelegs 661 an das Mobilendgerät 1 übertragen. Als Belegsidentifizierung kann beispielsweise die Mobilendgerätidentifizierung 662 oder eine andere, durch den Proxy-Server 6 generierte Belegsidentifizierung 663 verwendet werden. Das berechnete Beleg-Proxy 660 kann zusätzlich auch im Belegabbildungsspeicher 66 gespeichert werden. Auf Grund der vorgängig gespeicherten Beleg-Proxys 660 kann die kryptographische Funktion 621 zudem die Eindeutigkeit (Uniqueness) von neu berechneten Beleg-Proxys sicherstellen. Falls die kryptographische Funktion 621 feststellt, das ein berechnetes Beleg-Proxy einem vorgängig abgespeicherten Beleg-Proxy 660 entspricht, kann die Eindeutigkeit durch die kryptographische Funktion 621 beispielsweise mittels Datenwerten aus einem Zufallsgenerator herbeigeführt werden. Die Eindeutigkeit (uniqueness) von Beleg-Proxys kann durch die kryptographische Funktion 621 aber auch durch Hinzufügen von Datenelementen, beispielsweise zeitabhängige Werte oder Laufnummern, zum kryptographisch berechneten Proxy-Beleg erreicht werden. Vorzugsweise wird das Tupel, mit dem Beleg-Proxy 660 und der Belegsidentifizierung 662 oder 663, in einem Datenelement übertragen, das jeweils durch die Applikation im Mobilendgerät 1 automatisch in Meldungen eingefügt wird, die an den Internet-Server 5, respektive die Internet-Server-Applikation, gerichtet sind. Das Tupel kann beispielsweise der URL-Adresse (Uniform Resource Locator) hinzugefügt werden, die auf jedem Objekt angebracht ist, beispielsweise HTML- (Hypertext Markup Language) oder WML-Seiten (Wireless Markup Language), das vom Internet-Server 5, respektive der Internet-Server-Applikation, an das Mobilendgerät 1, respektive an eine Transaktionspartnerapplikation auf dem Mobilendgerät 1, beispielsweise ein WAP-Browser, übertragen wird, und die jeweils von diesen Applikationen des Mobilendgeräts 1 mit jeder Anfrage (Request) an den Internet-Server 5, respektive an die betreffende Internet-Server-Applikation, übertragen wird.

Die an den Internet-Server 5, respektive an die Internet-Server- Applikation, gerichtete Übertragung einer Meldung, die das Tupel, mit dem berechneten Beleg-Proxy und der Belegsidentifizierung, umfasst, durch das Mobilendgerät 1, respektive durch eine Applikation des Mobilendgeräts 1, wird in der Figur 4 durch den Pfeil 95 illustriert. Im Proxy-Server 6 wird dieser Meldung im Schritt 96 mittels des Beleg-Proxy-Prüfmoduls 63 das Tupel, mit dem Beleg-Proxy und der Belegsidentifizierung, entnommen und im Schritt 97 die Übereinstimmung des entnommenen Beleg-Proxys mit dem Beleg-Proxy überprüft, der aus dem durch die entnommene Belegsidentifizierung bestimmten gespeicherten Transaktionsidentifizierungsbeleg 661 berechenbar ist. Dabei wird für die Überprüfung entweder ein Beleg-Proxy aus dem durch die entnommene Belegsidentifizierung bestimmten gespeicherten Transaktionsidentifizierungsbeleg 661 berechnet, oder der entsprechende vorgängig berechnete und abgespeicherte Beleg-Proxy 660 verwendet, wodurch Rechenzeit eingespart werden kann. Bei einer positiven Übereinstimmung wird im Schritt 98, wie durch den Pfeil 99 illustriert, der durch die entnommene Belegsidentifizierung bestimmte gespeicherte Transaktionsidentifizierungsbeleg 661 mittels des Beleg-Übertragungsmoduls 64, unter Zuhilfenahme von Softwareschnittstellen des Internet-Servers 1 oder Kommunikationsfunktionen des Gateways 3, je nachdem wo der Proxy-Server 6 implementiert ist, an die betreffende Intemet-Server-Applikation übertragen. Falls keine Übereinstimmung vorliegt kann beispielsweise, wie durch den Pfeil 97' illustriert, eine Fehlermeldung an das Mobilendgerät 1 übertragen werden.

In einer Ausführungsvariante wird im Proxy-Server 6 durch das Protokolldateierfassungsmodul 65 die Protokolldatei 67 geführt, in der Informationen betreffend die durch den Proxy-Server durchgeführten Schritte 92, 93, 96, 97 und 98 zusammen mit Zeit- und/oder Datumsangaben des Zeitpunkts der Durchführung dieser Schritte gespeichert werden. Diese Informationen umfassen beispielsweise Angaben darüber, welche Transaktionsidentifizierungsbelege vom Internet-Server 5 entgegengenommen und gespeichert wurden, durch welche Beleg-Proxys diese Transaktionsidentifizierungsbelege ersetzt wurden, an jeweils welches Mobilendgerät 1 die Beleg-Proxys übertragen wurden, von welchem Mobilendgerät 1 die Beleg-Proxys zurück übertragen wurden, welche Beleg-Proxys im Proxy-Server 6 inkorrekt zurückerhalten wurden, und welche Transaktionsidentifizierungsbelege erfolgreich an den Internet-Server 5, respektive die betreffende Internet-Server-Applikation zurück übertragen wurden. Das Protokolldateierfassungsmodul 65 ist beispielsweise ein programmiertes Softwaremodul. Die Protokolldatei 67 wird in einer Datei oder einer Datenbank organisiert auf einer Festspeicherplatte gespeichert.

### Liste der Bezugszeichen

- 1: Mobilendgerät
- 2: Mobilfunknetz
- 3: Gateway
- 4: Internet
- 5: Internet-Server
- 6: Proxy-Server
- 7: Mobilnetz-Sicherheitsröhre
- 8: Internet-Sicherheitsröhre
- 61: Belegspeichermodul
- 62: Beleg-Proxy-Modul
- 63: Beleg-Proxy-Prüfmodul
- 64: Beleg-Übertragungsmodul
- 65: Protokolldateierfassungsmodul
- 66: Belegabbildungsspeicher
- 67: Protokolldatei
- 91: Schritt: Übertragung eines Transaktionsidentifizierungsbelegs
- 92: Schritt: Speicherung des Transaktionsidentifizierungsbelegs
- 93: Schritt: Berechnung eines Beleg-Proxys
- 94, 95: Schritt: Übertragung einer Belegsidentifizierung und des Beleg-Proxys
- 96: Schritt: Entnahme der Belegsidentifizierung und des Beleg-Proxys
- 97: Schritt: Überprüfung des Beleg-Proxys
- 97': Schritt: Fehlermeldung
- 98, 99: Schritt: Übertragung des Transaktionsidentifizierungsbelegs
- 621: kryptographische Funktion (One-Way-Hash-Funktion)
- 660: Beleg-Proxy
- 661: Gespeicherter Transaktionsidentifizierungsbeleg
- 662: Mobilendgerätidentifizierung
- 663: Belegsidentifizierung
- A: Applikationsebene
- P: Kommunikationsprotokollstapel
- S: Transportsicherheitsschicht
- SSL: Secure Socket Layer
- WTLS: Wireless Transport Layer Security

## Patentansprüche

1. Verfahren zur End-zu-End-Sicherung von Transaktionen zwischen einem Mobilendgerät (1) und einem Internet-Server (5) auf der Applikationsebene (A), in welchem Verfahren die Internet-Server-Applikation zur eindeutigen Identifizierung einer Applikationstransaktion Transaktionsidentifizierungsbelege an die Transaktionspartnerapplikation überträgt und Transaktionsidentifizierungsbelege entgegennimmt, die von der Transaktionspartnerapplikation zur eindeutigen Identifizierung der Applikationstransaktion an die Intemet-Server-Applikation zurück übertragen werden, **dadurch gekennzeichnet,**
**dass** kryptographische Transaktionsidentifizierungsbelege (661), die an Transaktionspartnerapplikationen im Mobilendgerät (1) gerichtet sind, in einem Transaktionsidentifizierungsbeleg-Proxy-Server (6), dem Mobilendgerät (1) zugeordnet gespeichert werden,
**dass** durch den Proxy-Server (6) jeweils eine Belegsidentifizierung (662, 663) eines betreffenden gespeicherten Transaktionsidentifizierungsbelegs (661) sowie ein Beleg-Proxy (660), das durch den Proxy-Server (6) aus dem betreffenden gespeicherten Transaktionsidentifizierungsbeleg (661) berechnet wird, an das Mobilendgerät (1) übertragen werden,
**dass** jeweils eine Belegsidentifizierung und ein Beleg-Proxy durch den Proxy-Server (6) aus den Meldungen entnommen werden, die vom Mobilendgerät (1) an die Internet-Server-Applikation gerichtet sind, und die Übereinstimmung des entnommenen Beleg-Proxys mit dem Beleg-Proxy (660) überprüft wird, das aus dem durch die entnommene Belegsidentifizierung bestimmten gespeicherten Transaktionsidentifizierungsbeleg (661) berechenbar ist, und
**dass** bei einer Übereinstimmung der durch die entnommene Belegsidentifizierung bestimmte gespeicherte Transaktionsidentifizierungsbeleg (661) an die Internet-Server-Applikation übertragen wird.

2. Verfahren gemäss Anspruch 1, **dadurch gekennzeichnet, dass** die an das Mobilendgerät (1) zu übertragenden Belegsidentifizierung (662, 663) und Beleg-Proxy (660) in einem Datenelement übertragen werden, das jeweils durch die Transaktionspartnerapplikation im Mobilendgerät (1) automatisch in Meldungen eingefügt wird, die an die Internet-Server-Applikation gerichtet sind.

3. Verfahren gemäss einem der Ansprüche 1 oder 2, **dadurch gekennzeichnet, dass** das Beleg-Proxy (660) mittels einer Oneway-Hash-Funktion (621) aus dem gespeicherten Transaktionsidentifizierungsbeleg (661) berechnet wird.

4. Verfahren gemäss einem der Ansprüche 1 bis 3, **dadurch gekennzeichnet, dass** bei der Speicherung der kryptographischen Transaktionsidentifizierungsbelege (661) im Proxy-Server (6) die Zuordnung zum Mobilendgerät (1) über die IP-Adresse (662) des Mobilendgeräts (1) erfolgt.

5. Verfahren gemäss einem der Ansprüche 1 bis 4, **dadurch gekennzeichnet, dass** im Proxy-Server (6) eine Protokolldatei (67) geführt wird, in der Angaben über die Ersetzung von Transaktionsidentifizierungsbelegen durch Beleg-Proxys, respektive von Beleg-Proxys durch Transaktionsidentifizierungsbelege, Angaben über den Zeitpunkt dieser Ersetzung sowie Angaben über die Transaktionspartner gespeichert werden, die an der Transaktion beteiligt sind, anlässlich welcher die Ersetzung vorgenommen wird.

6. Proxy-Server (6), der in die Kommunikationsstrecke zwischen einem Mobilendgerät (1) und einem Internet-Server (5) einfügbar ist, welcher Internet-Server (5) mindestens eine Internet-Server-Applikation umfasst, die zur eindeutigen Identifizierung einer Applikationstransaktion Transaktionsidentifizierungsbelege an die Transaktionspartnerapplikation überträgt und Transaktionsidentifizierungsbelege entgegennimmt, die von der Transaktionspartnerapplikation zur eindeutigen identifizierung der Applikationstransaktion an die Internet-Server-Applikation zurück übertragen werden, **dadurch gekennzeichnet,**
**dass** der Proxy-Server (6) erste Mittel umfasst, zur Speicherung von kryptographischen Transaktionsidentifizierungsbelegen (661), die an Transaktionspartnerapplikationen im Mobilendgerät (1) gerichtet sind, wobei die Speicherung dem Mobilendgerät (1) zugeordnet erfolgt,
**dass** der Proxy-Server (6) zweite Mittel umfasst, zur Berechnung eines Beleg-Proxys (660) aus einem betreffenden gespeicherten Transaktionsidentifizierungsbeleg (661), und zur Übertragung dieses Beleg-Proxys (660) sowie einer Belegsidentifizierung (662, 663) des betreffenden gespeicherten Transaktionsidentifizierungsbelegs (661) an das Mobilendgerät (1),
**dass** der Proxy-Server (6) dritte Mittel umfasst, zur Entnahme einer Belegsidentifizierung und eines Beleg-Proxys aus den Meldungen, die vom Mobilendgerät (1) an die Intemet-Server-Applikation gerichtet sind, und zur Überprüfung der Übereinstimmung des entnommenen Beleg-Proxys mit dem Beleg-Proxy (660), das aus dem durch die entnommene Belegsidentifizierung bestimmten gespeicherten Transaktionsidentifizierungsbeleg (661) berechenbar ist, und
**dass** der Proxy-Server (4) vierte Mittel umfasst, zur Übertragung des durch die entnommene Belegsidentifizierung bestimmten gespeicherten Transaktionsidentifizierungsbelegs (661) an die Internet-Server-Applikation bei einer Übereinstimmung.

7. Proxy-Server (6) gemäss Anspruch 6, **dadurch gekennzeichnet, dass** die zweiten Mittel so eingerichtet sind, dass sie die an das Mobilendgerät (1) zu übertragenden Belegsidentifizierung (662, 663) und Beleg-Proxy (660) in einem Datenelement übertragen, das jeweils durch die Transaktionspartnerapplikation im Mobilendgerät (1) automatisch in Meldungen eingefügt wird, die an die Internet-Server-Applikation gerichtet sind.

8. Proxy-Server (6) gemäss einem der Ansprüche 6 oder 7, **dadurch gekennzeichnet, dass** die zweiten Mittel eine Oneway-Hash-Funktion (621) umfassen, mittels welcher das Beleg-Proxy (660) aus dem gespeicherten Transaktionsidentifizierungsbeleg (661) berechnet wird.

9. Proxy-Server gemäss einem der Ansprüche 6 bis 8, **dadurch gekennzeichnet, dass** die ersten Mittel so eingerichtet sind, dass sie bei der Speicherung der kryptographischen Transaktionsidentifizierungsbelege (661) die Zuordnung zum Mobilendgerät (1) über die IP-Adresse (662) des Mobilendgeräts (1) vornehmen.

10. Proxy-Server (6) gemäss einem der Ansprüche 6 bis 9, **dadurch gekennzeichnet, dass** der Proxy-Server (6) weitere Mittel (65) umfasst, zur Führung einer Protokolldatei (67), in der Angaben über die Ersetzung von Transaktionsidentifizierungsbelegen durch Beleg-Proxy, respektive von Beleg-Proxys durch Transaktionsidentifizierungsbelege, Angaben über den Zeitpunkt dieser Ersetzung sowie Angaben über die Transaktionspartner gespeichert werden, die an der Transaktion beteiligt sind, anlässlich welcher die Ersetzung vorgenommen wird.

11. Proxy-Server (6) gemäss einem der Ansprüche 6 bis 10, **dadurch gekennzeichnet, dass** der Proxy-Server (6) mit dem Internet-Server (5) auf einem gemeinsamen Computer ausgeführt ist und in die Kommunikationsstrecke zwischen der Internet-Server-Applikation und der Transportsicherheitsschicht (SSL) des Internet-Servers (5) einfügbar ist.

12. Proxy-Server (6) gemäss einem der Ansprüche 6 bis 10, **dadurch gekennzeichnet, dass** der Proxy-Server (6) mit einem Gateway (3), der ein Mobilfunknetz (2) und das Internet (4) miteinander verbindet, auf einem gemeinsamen Computer ausgeführt ist und in die Kommunikationsstrecke zwischen der Transportsicherheitsschicht (WTLS) des Mobilfunknetzes (2) und der Transportsicherheitsschicht (SSL) des Internets (4) einfügbar ist.

## Claims

1. Method for end-to-end securing of transactions between a mobile terminal (1) and an Internet server (5) on the application level (A), in which method, for unambiguous identification of an application transaction, the Internet server application transmits transaction identification records to the transaction partner application and receives transaction identification records which are transmitted back to the Internet server application by the transaction partner application, for unambiguous identification of the application transaction, **characterised**
**in that** stored, assigned to the mobile terminal, in a transaction identification proxy record server (6), are cryptographic transaction identification records (661), which are directed to transaction partner applications in the mobile terminal (1),
**in that** transmitted to the mobile terminal (1) by the proxy server (6) in each case are a record identification (662, 663) for a respective stored transaction identification record (661) as well as a proxy record (660), which is calculated by the proxy server (6) from the respective stored transaction identification record (661),
**in that** taken in each case by the proxy server (6) from the messages directed by the mobile terminal (1) to the Internet server application are a record identification and a proxy record, and checked is the correspondence of the taken proxy record with the proxy record (660) which is calculable from the stored transaction identification record (661) determined through the taken record identification, and,
**in that** in the case of correspondence, transmitted to the Internet server application is the stored transaction identification record (661), determined through the taken record identification.

2. Method according to claim 1, **characterised in that** the record identification (662, 663) and proxy record (660) to be transmitted to the mobile terminal (1) are transmitted in a data element which is automatically inserted by the transaction partner application in the mobile terminal (1) in each case into messages that are directed to the Internet server application.

3. Method according to one of the claims 1 or 2, **characterised in that** the proxy record (660) is calculated from the stored transaction identification record (661) by means of a one-way hash function.

4. Method according to one of the claims 1 to 3, **characterised in that** during the storing of the cryptographic transaction identification records (661) in the proxy server (6), the assignment to the mobile terminal (1) takes place through the IP address (662) of the mobile terminal (1).

5. Method according to one of the claims 1 to 4, **characterised in that** a protocol data file is kept in the proxy server (6) in which data file are stored data about the replacement of transaction identification records with proxy records, respectively of proxy records with transaction identification records, data about the point in time of this replacement as well as data about the transaction partners, who are participating in the transaction, for which the replacement is made.

6. Proxy server (6), which is insertable in the communication path between a mobile terminal (1) and an Internet server (5), which Internet server (5) comprises at least one Internet server application, which, for unambiguous identification of the application transaction, transmits transaction identification records to the transaction partner application and receives transaction identification records which are transmitted back to the Internet server application by the transaction partner application, for unambiguous identification of the application transaction, **characterised**
**in that** the proxy server (6) comprises first means for storing cryptographic transaction identification records (661) which are directed to the transaction partner applications in the mobile terminal (1), whereby the storing takes place assigned to the mobile terminal (1),
**in that** the proxy server (6) comprises second means for calculating the proxy record (660) from a respective stored transaction identification record (661) and for transmitting to the mobile terminal (1) this proxy record (660) as well as a record identification (662, 663) for the respective stored transaction identification record (661),
**in that** the proxy server (6) comprises third means for taking a record identification and a proxy record from the messages which are directed from the mobile terminal (1) to the Internet server application and for checking the correspondence of the taken proxy record to the proxy record (660) which is calculable from the stored transaction identification record (661) determined through the taken record identification, and
**in that** the proxy server (4) comprises fourth means for transmitting, in the case of correspondence, to the Internet server application the stored transaction identification record (661) determined through the taken record identification.

7. Proxy server (6) according to claim 6, **characterised in that** the second means are set up in such a way that they transmit in a data element the record identification (662, 663) and proxy record (660) to be transmitted to the mobile terminal (1) which data element is automatically inserted by the transaction partner application in the mobile terminal (1) into messages which are directed to the Internet server application.

8. Proxy server (6) according to one of the claims 6 or 7, **characterised in that** the second means comprise a one-way hash function (621) by means of which the proxy record (660) is calculated from the stored transaction identification record (661).

9. Proxy server according to one of the claims 6 to 8, **characterised in that** the first means are set up in such a way that during storing of the cryptographic transaction identification records (661) they carry out the assignment to the mobile terminal (1) through the IP address of the mobile terminal (1).

10. Proxy server (6) according to one of the claims 6 to 9, **characterised in that** the proxy server (6) comprises further means (65) for keeping a protocol data file (67) in which are stored data about the replacement of transaction identification records with proxy records, respectively of proxy records with transaction identification records, data about the point in time of this replacement as well as data about the transaction partners taking part in the transaction for which the replacement is made.

11. Proxy server (6) according to one of the claims 6 to 10, **characterised in that** the proxy server (6) is implemented with the Internet server (5) on a common computer and is insertable in the communication path between the Internet server application and the transport security layer (SSL) of the Internet server (5).

12. Proxy server (6) according to one of the claims 6 to 10, **characterised in that** the proxy server (6) is implemented with a gateway (3), connecting together a mobile radio network (2) and the Internet (4), on a common computer, and is insertable in the communication path between the transport security layer (WTLS) of the mobile radio network (2) and the transport security layer (SSL) of the Internet (4).

## Revendications

1. Procédé de sécurité de bout-en-bout de transactions entre un périphérique mobile (1) et un serveur Internet (5) au niveau d'application (A), procédé dans lequel l'application Internet-Serveur transmet pour l'identification univoque d'une transaction d'application des justificatifs d'identification de transaction à l'application partenaire transactionnelle et reçoit des justificatifs d'identification de transaction qui sont retransmis par l'application partenaire transactionnelle pour l'identification univoque de la transaction d'application à l'application Internet-Serveur, **caractérisé en ce que**
des justificatifs d'identification de transaction cryptographiques (661) qui sont adressés aux applications partenaires transactionnelles dans le terminal mobile (1), sont stockés dans un serveur mandataire (6) de justificatifs d'identification de transaction et sont associés au terminal mobile (1),
respectivement une identification de justificatif (662, 663) d'un justificatif d'identification de transaction stocké concerné (661) ainsi qu'un mandataire de justificatif (660) qui est calculé par le serveur mandataire (6) à partir du justificatifs d'identification de transaction, sont transmis par le serveur mandataire (6) au terminal mobile (1),
**en ce que** respectivement une identification de justificatif et un mandataire de justificatif sont prélevés par le serveur mandataire (6) à partir des messages qui sont adressés par le terminal mobile (1) à l'application de serveur Internet et la concordance du mandataire de justificatif déduit avec le mandataire de justificatif (660) est vérifié, qui peut être calculé à partir du justificatif d'identification de transaction (661) stocké et défini par l'identification de justificatif déduite et
**en ce qu'**en cas de concordance le justificatif d'identification de transaction (661) stocké et défini par l'identification de justificatif déduite est transmis à l'application Internet-serveur.

2. Procédé selon la revendication 1, **caractérisé en ce que** l'identification de justificatif (662, 663) à transmettre au terminal mobile (1) et le mandataire de justificatif (660) sont transmis dans un élément de données qui est inséré dans le terminal mobile (1) par l'application partenaire transactionnelle respectivement automatiquement dans des messages qui sont adressés à l'application Internet-Serveur.

3. Procédé selon l'une des revendications 1 ou 2, **caractérisé en ce que** le mandataire de justificatif (660) est calculé au moyen d'une fonction de hachage unidirectionnel (621) à partir du justificatif d'identification de transaction stocké (661).

4. Procédé selon l'une des revendications 1 à 3, **caractérisé en ce que** lors du stockage des justificatifs d'identification de transaction cryptographiques (661), il s'effectue dans le serveur mandataire (6) l'association au terminal mobile (1) par l'adresse IP (662) du terminal mobile (1).

5. Procédé selon l'une des revendications 1 à 4, **caractérisé en ce que** dans le serveur mandataire (6) un fichier de protocole (67) est tenu dans lequel sont stockées des indications sur le remplacement de justificatifs d'identification de transaction par des mandataires de justificatifs, respectivement de mandataires de justificatif par des justificatifs d'identification de transaction, des indications sur le moment de ce remplacement ainsi que des indications sur les partenaires transactionnels qui sont impliqués dans la transaction à l'occasion de laquelle est effectué le remplacement.

6. Serveur mandataire (6), qui est insérable dans le parcours de communication entre un terminal mobile (1) et un serveur Intemet (5), serveur Internet (5) qui comprend au moins l'application Internet-Serveur qui transmet pour l'identification univoque d'une transaction d'application des justificatifs d'identification de transaction à l'application partenaire transactionnelle et reçoit des justificatifs d'identification de transaction qui sont retransmis par l'application partenaire transactionnelle pour l'identification univoque de la transaction d'application à l'application Internet-Serveur, **caractérisé en ce que**
le serveur mandataire (6) comprend des premiers moyens pour le stockage de justificatifs d'identification de transaction cryptographiques (661) qui sont adressés à des applications partenaires transactionnelles dans le terminal mobile (1), le stockage s'effectuant de manière associée au terminal mobile (1),
**en ce que** le serveur mandataire (6) comprend des seconds moyens pour le calcul d'un mandataire de justificatif (660) à partir d'un justificatif d'identification de transaction (661) et pour la transmission de ce mandataire de justificatif (660) ainsi qu'une identification de justificatif (662, 663) du justificatif d'identification de transaction stocké concerné (661) au terminal mobile (1),
**en ce que** le serveur mandataire (6) comprend des troisièmes moyens pour le prélèvement d'une identification de justificatif et d'un mandataire de justificatif à partir de messages qui sont adressés par le terminal mobile (1) à l'application Internet-Serveur et pour la vérification de la concordance du mandataire de justificatif prélevé avec le mandataire de justificatif (660) qui peut être calculé à partir du justificatif d'identification de transaction (661) stocké défini par l'identification de justificatif déduite et
**en ce que** le serveur mandataire (6) comprend des quatrièmes moyens pour la transmission du justificatif d'identification de transaction (661) stocké défini par l'identification de justificatif déduite à l'application Intemet-Serveur en cas de concordance.

7. Serveur mandataire (6), selon la revendication 6, **caractérisé en ce que** les seconds moyens sont agencés de sorte qu'ils transmettent l'identification de justificatif (662, 663) à transmettre au terminal mobile (1) et des mandataires de justificatif (660) dans un élément de données qui est inséré dans le terminal mobile (1) par l'application partenaire transactionnelle respectivement automatiquement dans des messages qui sont adressés à l'application Internet-Serveur.

8. Serveur mandataire (6) selon l'une des revendications 6 ou 7, **caractérisé en ce que** les seconds moyens comprennent une fonction de hachage unidirectionnel (621) au moyen de laquelle le mandataire de justificatif (660) est calculé à partir du justificatif d'identification de transaction stocké (661).

9. Serveur mandataire (6) selon l'une des revendications 6 à 8, **caractérisé en ce que** les premiers moyens sont agencés de sorte qu'ils effectuent lors du stockage des justificatifs d'identification de transaction cryptographiques (661) l'association au terminal mobile (1) par une adresse IP (662) du terminal mobile (1).

10. Serveur mandataire (6) selon l'une des revendications 6 à 9, **caractérisé en ce que** le serveur mandataire (6) comprend d'autres moyens (65) pour la tenue d'un ficher de protocole (67) dans lequel sont stockées des indications sur le remplacement de justificatifs d'identification de transaction par des mandataires de justificatifs, respectivement des mandataires de justificatif par des justificatifs d'identification de transaction, des indications sur le moment de ce remplacement ainsi que des indications sur les partenaires transactionnels qui sont impliqués dans la transaction à l'occasion de laquelle est effectué le remplacement.

11. Serveur mandataire (6) selon l'une des revendications 6 à 10, **caractérisé en ce que** serveur mandataire (6) est exécuté avec le serveur Internet (5) sur un ordinateur commun et peut être inséré dans le parcours de communication entre l'application Intemet-Serveur et la couche de sécurité de transport (SSL) du serveur Internet (6).

12. Serveur mandataire (6) selon l'une des revendications 6 à 10, **caractérisé en ce que** le serveur mandataire (6) est exécuté sur un ordinateur commun avec une passerelle (3) qui relie entre eux un réseau mobile (2) et l'Internet (4) et peut être inséré dans le parcours de communication entre la couche de sécurité de transport (WTLS) du réseau mobile (2) et la couche de sécurité de transport (SSL) de l'Internet (4).
